# EUROPÄISCHE PATENTSCHRIFT

(11) **EP 0 710 197 B1**
(45) Veröffentlichungstag und Bekanntmachung des Hinweises auf die Patenterteilung: **15.04.1998**
(21) Anmeldenummer: 94921658.4
(22) Anmeldetag: 20.07.1994
(51) Int. Cl.: B60T 8/36, F16K 27/00

(54) **ELEKTROHYDRAULISCHE DRUCKREGELVORRICHTUNG**
ELECTROHYDRAULIC PRESSURE REGULATING DEVICE
DISPOSITIF ELECTROHYDRAULIQUE DE REGULATION DE LA PRESSION

(30) Priorität: 29.07.1993 DE 4325412
(43) Veröffentlichungstag der Anmeldung: 08.05.1996
(73) Patentinhaber: ITT Automotive Europe GmbH, 60488 Frankfurt (DE)
(72) Erfinder: HINZ, Axel, D-61267 Neu-Anspach (DE); CZARNETZKI, Edwin, D-65604 Elz (DE)
(86) Internationale Anmeldenummer: EP9402380
(87) Internationale Veröffentlichungsnummer: WO9503961

(56) Entgegenhaltungen:
- WO-A-89/10286
- WO-A-92/08630
- WO-A-92/12878

## Beschreibung

Die Erfindung betrifft eine elektrohydraulische Druckregelvorrichtung, insbesondere Bremsdruckregelvorrichtung, nach dem Oberbegriff des Anspruchs 1.

Eine elektrohydraulische Druckregelvorrichtung der gattungsbildenden Art wird beispielhaft in der internationalen Veröffentlichung WO 92/12878 beschrieben, wonach über die bereits hinreichend bekannte Blockbauweise des Ventilaufnahmekörpers hinaus der Deckel mittels eines plattenförmigen Trägerelementes unterteilt ist, um einerseits einen elektronischen Regler oder Teile eines elektronischen Reglers aufzunehmen, andererseits die elektrische Verbindung zwischen dem elektronischen Regler und den an den Elektromagnetventilen überstehenden Kontaktelementen herzustellen. Der Deckel ist mit den Spulen der Elektromagnetventile auf die Ventildome des Ventilaufnahmekörpers aufgesteckt, wobei zur Herstellung des elektrischen Anschlusses zwischen den Kontaktelementen und den im Deckel integrierten elektronischen bzw. elektrischen Komponenten Steckkontakte ineinander greifen. Zur Befestigung der Spulen am Trägerelement wird vorgeschlagen, elastische Halterungen, beispielsweise Federn zu verwenden oder die Spulen in einem elastischen Formkörper einzubetten. Die elastischen Halterungen gestalten sich hierbei hinsichtlich ihrer Auslegung als komplex.

Es ist die Aufgabe der Erfindung, die aus dem genannten Stand der Technik bekannte Druckregelvorrichtung zu verbessern, um eine einfache Spulenpositionierung, eine kompakt- sowie funktionsoptimierte Anordnung der Spulen gegenüber dem Trägerelement zu schaffen, die möglichst einfach herzustellen und zu prüfen ist, wobei unterschiedliche Wärmedehnungen der Bauteile sowie Bauteiltoleranzen möglichst spannungsfrei aufgenommen werden sollen.

Die gestellte Aufgabe wird erfindungsgemäß durch die kennzeichnenden Merkmale des Patentanspruchs 1 gelöst.

Weitere Merkmale, Vorteile und Anwendungsmöglichkeiten gehen aus der folgenden Darstellung zweier Ausführungsbeispiele hervor.

Es zeigen:
- Figur 1: einen Teilschnitt durch die erfindungsgemäße Druckregelvorrichtung,
- Figur 2: eine alternative Anordnung der elektrischen Kontaktelemente in einer Seitenansicht der Druckregelvorrichtung.

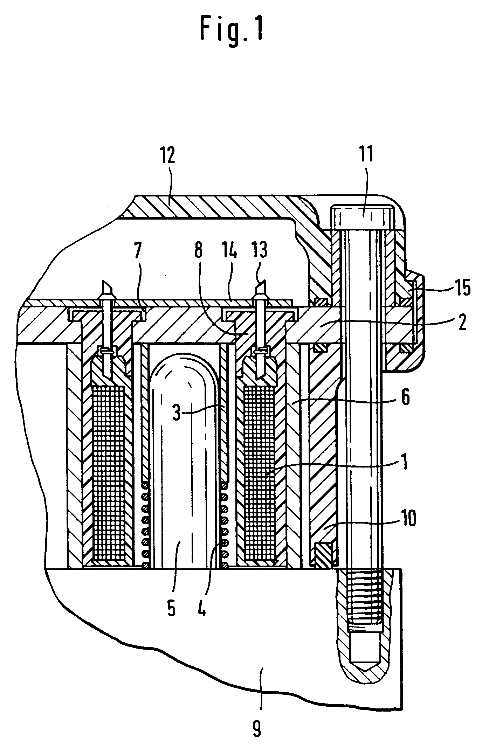

Die Figur 1 zeigt eine Seitenansicht der erfindungsgemäßen Druckregelvorrichtung mit einer Skizzierung der Grundkomponenten. Der dargestellte rechte Abschnitt der Druckregelvorrichtung besteht aus einem im Profilschnitt gezeigten Deckel 12, der auf einem mehrere Leiterbahnen 14 aufweisenden Trägerelement 2 aufgesetzt ist. Unterhalb des Trägerelementes 2 begrenzt ein Rahmen 10 eine von mehreren Spulen 1 der Elektromagnetventile. Zur Aufnahme der an den Spulen 1 hervorstehenden Kontaktelemente 13 ist das Trägerelement 2 mit mehreren Durchgangsbohrungen 7 versehen, die vom Isolierstoff 8 der Spulen 1 ausgefüllt sind. Der Isolierstoff 8 bildet einen Kunststoff, der als peripheres Bestandteil einer jeden Spule 1 am Trägerelement 2 verankert ist. Das Trägerelement 2 ist als im wesentlichen horizontal auf die Kontaktelemente 13 der Spulen 1 aufgesetzte Stahlplatte ausgeführt, die mehrere auf ihrer Unterseite angeformte Rohrkörper 6 aufweist, die die mit Isolierstoff 8 ummantelten Spulen 1 aufnehmen. Die Rohrkörper 6 sind aus Stahl gefertigt und an der Unterseite des Trägerelementes 2 angeschweißt. Der blockförmige Ventilaufnahmekörper 9 ist gleichfalls aus Stahl gefertigt und mit Ventildomen 5 versehen. Auf den (explizit nicht dargestellten) in zwei parallelen Reihen angeordneten Ventildomen 5 werden die am Trägerelement 2 verankerten Spulen 1 nach dem Aufsetzen von Federelementen 4 und Hülsen 3 auf den Ventildomen 5 gleichfalls übergestülpt. Die mit Druckfedern belasteten Hülsen 3 weisen gegenüber den Spulen 1 einen groß dimensionierten radialen Luftspalt auf, der unabhängig von horizontalen Bauteiltoleranzen das Ausrichten und Aufsetzen der Spulen 1 auf dem Ventilaufnahmekörper 9 ermöglicht. Der Ausgleich von vertikalen Bauteiltoleranzen im Bereich der Spulenaufhängung wird durch die elastische Abstützung der Hülse 3 aufgenommen. Durch die erfindungsgemäße Anordnung der vorgespannten Hülse 3 am Ventildom 5 ist trotz relativ großer Bauteiltoleranzen jederzeit der Magnetkreis zwischen dem Ventilaufnahmekörper 9, dem Rohrkörper 6, dem Trägerelement 2, der Hülse 3 und über den Ventildom 5 zum nicht explizit dargestellten Magnetkern innerhalb des Ventildoms 5 geschlossen. Der den Deckelvorsprung 15 übergreifende Rand des Rahmens 10 bildet eine Montageeinheit mit dem Deckel 12 und dem Trägerelement 2 und wird mittels beidseitig an der Montageeinheit angeordneten Schrauben (Zuganker 11) am Ventilaufnahmekörper 9 befestigt.

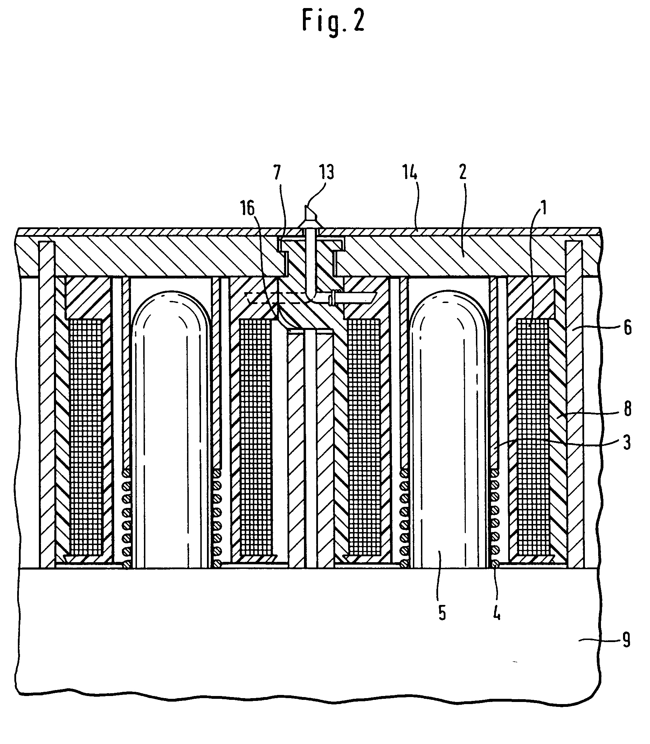

Die Figur 2 zeigt einen Längsschnitt durch eine alternative Ausführungsform zur Anordnung der Spulen 1 am Trägerelement 2. Abweichend von Figur 1 bilden die Rohrkörper 6 mit dem Trägerelement 2 einen Preßsitz, wozu das Trägerelement 2 auf der Unterseite mit Ringnuten versehen ist. Zwischen den einander benachbarten Mantelflächen der Rohrkörper 6 befindet sich ein Bereich für die zentrale Aufnahme der Kontaktelemente 13, wozu die Rohrkörper 6 mit Öffnungen 16 versehen sind. Die radial aus den Spulen 1 hervorstehenden und aufeinander zugerichteten Kontaktelemente 13 sind rechtwinklig nach oben abgekröpft und vom Isolierstoff 8 einer jeden Spule 1 umgossen. Zwei Kontaktelemente 13 einer jeden Spule 1 bilden somit eine vom Isolierstoff 8 der Spule 1 umschlossene und seitlich zur Spule 1 hervorstehende Einheit, die paarweise hintereinander (bezogen auf die Senkrechte zur Zeichnungsebene) zwischen den benachbarten Spulen 1 komprimiert angeordnet sind und fluchtend in den hintereinander gelegenen Durchgangsbohrungen 7 zum Anschluß an die Leiterbahnen 14 geführt sind. Durch das Verlegen der in Figur 1 beschriebenen Kontaktelementenanordnung beiderseits eines jeden Ventildoms 5, in den Zwischenraum benachbarter Ventildome, werden oberhalb des Trägerelements 2 erhebliche Raumvorteile zur Aufnahme von Teilen einer Steuerelektronik erzielt, so daß hinsichtlich der Anordnung von elektrischen bzw. elektronischen Komponenten erhebliche Gestaltungsfreiheiten bestehen, die überdies auch eine gedrungene Bauweise des Deckels 12 ermöglichen.

Zusammenfassend läßt sich festhalten, daß durch die Erfindung keine elastische Halterung der Spulen oder elastische Formkörper benötigt werden, aufwendiges (großvolumiges) Umspritzen bzw. Umgießen der Spulen 1 entfällt. Reinigungs- und Entformungsprobleme werden vermieden. Das Trägerelement 2 bildet mit den Rohrkörpern 6 und dem Isolierstoff 8 eine einfache herzustellende Einheit zur Aufnahme der Spulen 1, wobei die Spulen 1 über den Isolierstoff 8 eine verpreßte Verbindung mit dem Rohrkörper 6 aufweisen, so daß die Kontaktelemente 13 an den Leiterbahnen 14 zugentlastet sind. Durch die Verwendung von einfach herzustellenden Hülsen 3 aus Strangmaterial wird auf verblüffend einfache Weise jederzeit eine von Bauteiltoleranzen unabhängige Anordnung der Spulen 1 an den Ventildomen 5 erreicht und der Magnetkreis geschlossen. Der horizontale und vertikale Abstand der Spulen 1 gegenüber den Ventildomen 5 kann großzügig bemessen werden, was den Montagevorgang der elektrischen Baugruppe auf dem Ventilaufnahmekörper 9 erheblich erleichert.

### Bezugszeichenliste

- 1: Spule
- 2: Trägerelement
- 3: Hülse
- 4: Federelement
- 5: Ventildom
- 6: Rohrkörper
- 7: Durchgangsbohrung
- 8: Isolierstoff
- 9: Ventilaufnahmekörper
- 10: Rahmen
- 11: Zuganker
- 12: Deckel
- 13: Kontaktelement
- 14: Leiterbahn
- 15: Deckelvorsprung
- 16: Öffnung

## Patentansprüche

1. Elektrohydraulische Druckregelvorrichtung, insbesondere Bremsdruckregelvorrichtung, wie Antiblockierregelvorrichtung, Antriebsschlupfregelvorrichtung, mit elektromagnetisch betätigbaren Hydraulikventilen, die an einem Ventilaufnahmekörper (9) angeordnet sind, mit Spulen (1), die an ihren den Ventilaufnahmekörper (9) überragenden Teilen mit elektrischen Kontaktelementen (13) versehen sind, mit einem Deckel (12), der die überragenden Spulenteile und die Kontaktelemente (13) abdeckt, mit einem Trägerelement (2) zur Aufnahme der Spulen (1), das innerhalb des Deckels (12) angeordnet ist, wobei der Deckel (12) oder ein Teil des Deckels (12) für die Aufnahme eines elektronischen Reglers oder für die Aufnahme von Anschlußteilen für einen elektronischen Regler geeignet ist, dadurch **gekennzeichnet**, daß an der den Spulen (1) zugewandten Unterseite des im wesentlichen plattenförmigen Trägerelementes (2) Hülsen (3) anliegen, die die Magnetkreise der Hydraulikventile schließen und die durch Federelemente (4) beaufschlagt auf Ventildomen (5) geführt sind.

2. Elektrohydraulische Druckregelvorrichtung nach Anspruch 1, dadurch **gekennzeichnet**, daß auf der Unterseite des im wesentlichen plattenförmigen Trägerelementes (2) mehrere Rohrkörper (6) angebracht sind, die die Spulen (1) peripher umschließen.

3. Elektrohydraulische Druckregelvorrichtung nach Anspruch 1 oder 2, dadurch **gekennzeichnet**, daß das Trägerelement (2) mit Durchgangsbohrungen (7) versehen ist, deren lichte Weite zumindest der Dicke eines die Spulen (1) umschließenden Isolierstoffs (8) entspricht.

4. Elektrohydraulische Druckregelvorrichtung nach Anspruch 3, dadurch **gekennzeichnet**, daß die Spule (1) mit dem Isolierstoff (8) im Rohrkörper (6) einen Preßsitz aufweist.

5. Elektrohydraulische Druckregelvorrichtung nach mindestens einem der vorhergehenden Ansprüche, dadurch **gekennzeichnet**, daß zwischen dem Trägerelement (2) und dem Ventilaufnahmekörper (9) abgedichtet ein Rahmen (10) eingespannt ist.

6. Elektrohydraulische Druckregelvorrichtung nach einem der vorhergehenden Ansprüche, dadurch **gekennzeichnet**, daß das Trägerelement (2) mittels eines Zugankers (11) zwischen dem Rahmen (10) und dem Deckel (12) eingespannt ist.

7. Elektrohydraulische Druckregelvorrichtung nach Anspruch 3, dadurch **gekennzeichnet**, daß die elektrischen Kontaktelemente (13) jeweils zweier benachbarter Spulen (1) nebeneinander im Isolierstoff (8) jeder Spule (1) beabstandet und zentral zusammengefaßt sind, wobei die Kontaktelemente (13) radial aus den Spulen (1) hervorreichen und in Richtung der Durchgangsbohrungen (7) im Isolierstoff (8) abgekröpft sind.

## Claims

1. Electrohydraulic pressure control device, more particularly brake pressure control device, such as an anti-lock control device, or a traction slip control device, including electromagnetically controllable hydraulic valves which are arranged on a valve-accommodating member (9), coils (1) which are equipped with electric contact elements (13) on their parts surmounting the valve-accommodating member (9), a lid (12) covering the surmounting coil parts and the contact elements (13), a support element (2) for accommodating the coils (1) which is arranged within the lid (12), wherein the lid (12) or part of the lid (12) is adapted for the accommodation of an electronic controller or the accommodation of terminals for an electronic controller, **characterized** in that bushes (3) abut the underside of the essentially flat panel support element (2) facing the coils (1), the bushes closing the magnetic circuits of the hydraulic valves and being acted upon by spring elements (4) so as to be guided on valve domes (5).

2. Electrohydraulic pressure control device as claimed in claim 1,
**characterized** in that attached to the underside of the essentially flat panel support element (2) are several tubular elements (6) which peripherally enclose the coils (1).

3. Electrohydraulic pressure control device as claimed in claim 1 or 2,
**characterized** in that the support element (2) includes lead-throughs (7) having an inside diameter which is at least equal to the thickness of a sealer (8) enclosing the coils (1).

4. Electrohydraulic pressure control device as claimed in claim 3,
**characterized** in that the coil (1) along with the sealer (8) has a press fit in the tubular element (6).

5. Electrohydraulic pressure control device as claimed in at least one of the preceding claims,
**characterized** in that a frame (10) is mounted and sealed between the support element (2) and the valve-accommodating member (9).

6. Electrohydraulic pressure control device as claimed in any one of the preceding claims,
**characterized** in that the support element (2) is compressed by means of a tension rod (11) between the frame (10) and the lid (12).

7. Electrohydraulic pressure control device as claimed in claim 3,
**characterized** in that the electric contact elements (13) of two adjacent coils (1) are spaced next to one another within the sealer (8) of each coil (1), with the contact elements (13) projecting from the coils (1) in a radial fashion and having been crimped within the sealer (8) in the direction of the lead-throughs (7).

## Revendications

1. Dispositif de régulation de pression électro-hydraulique, notamment dispositif de régulation de pression de freinage, tel que dispositif de régulation antiblocage, dispositif de régulation du glissement de traction, comprenant des valves hydrauliques à actionnement électromagnétique, qui sont disposées sur un corps de logement de valves (9), des bobines (1), qui sont pourvues d'éléments de contact électrique (13) sur leurs parties faisant saillie hors du corps de logement de valves (9), un couvercle (12), qui recouvre les parties de bobine en saillie et les éléments de contact (13), et un élément de support (2) qui sert à recevoir les bobines (1) et est disposé à l'intérieur du couvercle (12), le couvercle (12) ou une partie du couvercle (12) étant apte à loger un régulateur électronique ou à loger des parties de raccordement prévues pour un régulateur électronique, caractérisé en ce que des manchons (3) prennent appui sur la face inférieure, tournée vers les bobines (1), de l'élément de support (2) essentiellement en forme de plaque, les manchons (3) fermant les circuits magnétiques des valves hydrauliques et étant guidés sur les dômes de valve (5) en étant soumis à l'action d'éléments élastiques (4).

2. Dispositif électro-hydraulique de régulation de pression suivant la revendication 1, caractérisé en ce que plusieurs corps tubulaires (6), qui entourent les bobines (1) d'une manière périphérique, sont montés sur la face inférieure de l'élément de support (2) essentiellement en forme de plaque.

3. Dispositif électro-hydraulique de régulation de pression suivant la revendication 1 ou 2, caractérisé en ce que l'élément de support (2) est pourvu d'ouvertures traversantes (7) dont la dimension libre est égale au moins à l'épaisseur d'une matière isolante (8) entourant les bobines (1).

4. Dispositif électro-hydraulique de régulation de pression suivant la revendication 3, caractérisé en ce que la bobine (1) comportant la matière isolante (8) présente un ajustement serré dans le corps tubulaire (6).

5. Dispositif électro-hydraulique de régulation de pression suivant au moins l'une des revendications précédentes, caractérisé en ce qu'un cadre (10) est serré, d'une manière étanche, entre l'élément de support (2) et le corps de logement de valves (9).

6. Dispositif électro-hydraulique de régulation de pression suivant l'une des revendications précédentes, caractérisé en ce que l'élément de support (2) est serré entre le cadre (10) et le couvercle (12) au moyen d'un tirant (11).

7. Dispositif électro-hydraulique de régulation de pression suivant la revendication 3, caractérisé en ce que, pour chaque paire de bobines (1) voisines, les éléments de contact électrique (13) des bobines (1) sont réunis l'un à côté de l'autre dans la matière isolante (8) d'une bobine (1) respective, en position centrale et d'une manière espacée, les éléments de contact (13) faisant saillie radialement hors des bobines (1) et étant coudés dans la matière isolante (8) en direction des ouvertures traversantes (7).
